# EUROPEAN PATENT APPLICATION

(11) **EP 0 744 596 A1**
(43) Date of publication of application: **27.11.1996**
(21) Application number: 96303637.1
(22) Date of filing: 21.05.1996
(51) Int. Cl.: G01F 1/66

(54) **Ultrasonic flow meter**

(30) Priority: 23.05.1995 GB 9510347
(71) Applicant: SMITH METERS LIMITED, Streatham Vale London, SW16 5JE (GB)
(72) Inventor: Sanderson, Michael Langley, Cranfield, Bedfordshire MK43 OJD (GB); Guilbert, Alexander Robert, "La Maison de Haut", Câtel, Guernsey, Channel Islands GY5 7AN (GB)
(74) Representative: Spence, Anne

(57) **Abstract**

The application discloses an ultrasonic meter including a pair of transducers for measuring the transit times of ultrasonic pulses within a fluid flowing through a measuring tube, wherein the effective diameters of the transducers is at least 20% greater than the average effective diameter of the measuring tube. In more preferred forms, the transducers are more than 75% larger, more preferably approximately twice as large. This advantageously allows the peripheral portion of the transducer to be employed to measure the speed of sound in still fluid around the measuring tube, for example contained in an outer tube around the measuring tube. The application also discloses an ultrasonic flow meter wherein the measuring tube has a bell shaped mouth at the inlet end, a first outward taper along the majority of its length towards the outlet end, the first taper preferably being in the range 2° to 5° and has a second taper at the outlet end, the second taper preferably being in the range of 5° to 10°. It is further preferred if the inlet end is curved through approximately 90° with a radius which is less than half the diameter of the tube, while the outlet end has a length less than one sixth and preferably less than one eighth of the length of the tube.

## Description

This invention relates to apparatus for measuring the flow rate of a fluid flowing through a pipe system by measuring the transit times of ultrasonic pulses within the fluid. Ultrasonic flow meters, for example for measuring the gas consumption in households, are already known.

The ultrasonic signals are sent sequentially first in the direction of fluid flow (down stream) and then against the direction of flow (up stream). The transit times t_{d} and tᵤ for these ultrasonic signals are measured and it can be shown that the velocity of flow is approximately proportional to (1/t_{d} - 1/tᵤ).

One of the problems with such meters is that the velocity profile of the gas across the measuring flow tube varies with the velocity of the gas. For example as the flow changes from laminar to turbulent. If the velocity measured is at the centre of the flow tube then the relationship between the measured velocity and the actual average velocity is substantially nonlinear. This is particularly so for slow flows where the velocity profile across the tube is approximately parabolic. Although in the case of a particular fluid this non linearity can be linearised by associated electronics, this itself produces problems and it is not possible when a range of fluids with different properties is to be measured.

The variations of volume of flow to be measured in a gas meter is very considerable. For example the meter may be required to measure within a flow range of 6000 L/H to 80 L/H with errors below plus or minus 1.5% and from 80 L/H down to 40 L/H with an error of less than plus or minus 3%. One object of the present invention is to reduce the error produced by the non linearity of flow through the measuring flow tube. We have found that this error can be reduced by making the effective diameter of the transducers between which the signals are transmitted larger than the effective average diameter of the flow tube.

Accordingly in one aspect the present invention provides an ultrasonic meter using a pair of transducers for measuring the transit times of ultrasonic pulses within a fluid flowing through a measuring tube in which the effective diameters of the transducers is at least 20% greater than the average effective diameter of the measuring tube.

In a preferred form the invention provides such apparatus comprising a measuring tube for location in the flow path of fluid in the system, first and second transducers located at opposite ends of the measuring tube and arranged to respectively transmit and receive sequentially signals to and from each other, which signals pass through the tube in paths which are substantially symmetrical about the axis of the tube and in which the diameters of the active areas of the faces of the transducers are greater than the average diameter of the effective length of the tube, excluding any widened inlet or outlet portions thereof. The relevant diameters of the transducers are preferably at least 25% greater, most preferably 75% greater and preferably approximately double the average diameter of the measuring tube.

The transducers are preferably mounted coaxially with the measuring tube but may be arranged in cooperation with reflectors so that effectively the paths of signals passing through the tube are symmetrical about its axis and symmetrical about the centres of the transducers.

Another problem with such ultrasonic flow meters is that the accuracy of the fluid speed measurement is degraded by time delays across the transducers and their associated electronics. The time delays across transducers and their associated electronics may be significant and in addition these time delays may vary with for example temperature or age.

The above causes errors in the measured velocity and therefore the inferred volume passed.

It is known, that the above errors can be substantially eliminated by measuring the speed of sound in stationary fluid and adjusting the calculations using this measurement.

According to a preferred aspect of the present invention, the peripheral portion of one of the first and second transducers is used to provide the measurement of the speed of sound in the stationary fluid. This eliminates the need for a third transducer to carry out this measurement.

According to a preferred feature, one end of the measuring tube is surrounded by an outer tube which is open, adjacent the periphery of one of the transducers, to the fluid in the system, but is not in the flow path of the fluid and therefore contains substantially stationary fluid of the type to be measured; the other end of the outer tube is preferably closed but may be provided with a small hole to reflush the stationary fluid. A signal from the peripheral portion of the relevant transducer is sent in the direction parallel to the tube axis down the tube and reflected from the closed end of the outer tube and returned to that peripheral portion of the transducer. The speed of sound in the stationary fluid is then calculated from the timed measurements. Preferably the length of the outer tube is less than one quarter the length of the measuring tube.

With ultrasonic flow meters it is desirable for flow tubes to have as small a diameter as possible to increase the velocity of the fluid being measured and hence increase the time differences being measured. Clearly it is easier to measure larger times. However having flow tubes with small diameters may cause a relatively large pressure drop across the meter which is undesirable.

To reduce the overall pressure loss it is important to ensure that when the fluid changes velocity it maintains as much of its kinetic energy as possible. As long as the kinetic energy is maintained when the fluid travels faster, then it may be possible to recover the associated pressure loss by slowing the fluid down in a controlled manner. By careful design of the flow tube it is possible to obtain a reasonable velocity for the gas while keeping the total pressure drop across the meter relatively low.

We have found a shape of measuring tube which provides an advantageous fluid velocity while keeping the pressure loss low.

According to a preferred aspect of the present invention or a separate invention, for which a Divisional application may be filed, in an ultrasonic flow meter the measuring tube has a bell shaped mouth at the inlet end, a first outward taper along the majority of its length towards the outlet end, the first taper preferably being in the range 2° to 5° and has a second taper at the outlet end, the second taper preferably being in the range of 5° to 10°.

The inlet end is preferably curved through approximately 90° with a radius which is less than half the diameter of the tube, while the outlet end has a length less than one sixth and preferably less than one eighth of the length of the tube.

One embodiment of ultrasonic flow meter in accordance with the invention, will now be described, by way of example only with reference to the accompanying drawings of which:-
Figure 1 is an axial section through an ultrasonic flow meter, and
Figure 2 is a plot showing the sensitivity variation of an ultrasonic meter to parabolic and flat velocity profile dependant on the ratio of the transducer diameter to the measuring tube diameter.

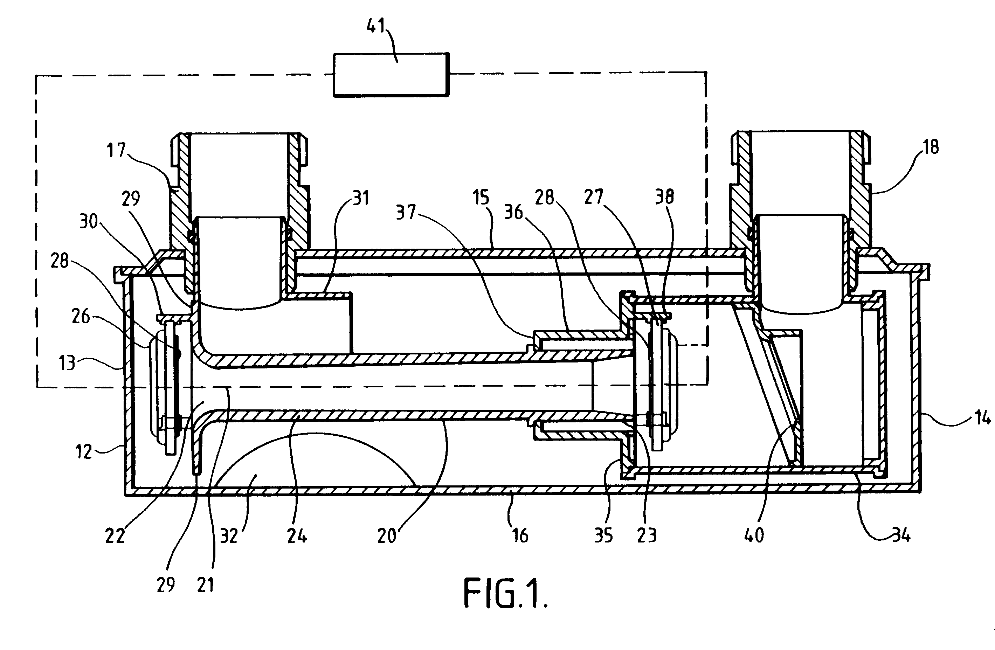

Referring to Figure 1, an elongate closed, substantially rectangular sectioned, casing 12 has opposite ends 13,14, a top 15 and a bottom 16. Inlet and outlet boss assemblies 17,18 are located in the top in sealed manner, adjacent opposite ends and define inlet and outlet passages to/from the casing, extending parallel to one another and normal to the length of the casing. Each of the boss assemblies includes a connection means for connection to a piping system through which the gas to be measured flows.

A circular sectioned, flow measuring tube 20, having an axis 21, is mounted in the casing to extend parallel to the casing length. The tube 20 has an inlet end 22, an outlet end 23 and a central part 24 extending for at least three quarters of the tube total length. In this example the tube has a length 120 millimetres and the average internal diameter of the central portion (excluding the inlet and outlet ends) is 12.25 millimetres.

First and second transducers 26,27 are mounted coaxially with the tube 20 and symmetrically spaced respectively from the inner and outer ends of the tube, in this example the spacing is 7 millimetres. Each transducer has an active face 28 of 25 millimetre diameter. It will thus be seen that in this preferred embodiment the active faces of the transducers have diameters approximately twice the diameter of the tube.

The inlet end 22 is bell mouthed and formed by turning the tube wall through 90° with a radius less than half that of the tube average diameter so as to form an outwardly extending annular flange 29. Flange 29 is provided with supports 30 for mounting the transducer 26.

The internal diameter of the central portion 24 of the tube 20 tapers outwardly towards the outlet end at a small angle of approximately 3°. The outlet end tapers outwardly at a slightly greater angle of approximately 7.5°. This provides a desired flow velocity without excessive pressure drop across the meter.

The inlet boss assembly is connected to an inlet flow guide member 31 surrounding the upper half of the flow tube 20 and connected to the upper part of flange 29, to initially direct the incoming flow of fluid entering the casing away from the inlet end of the measuring tube. An optional upwardly curved, guide member 32 is located in the lower part of the casing.

The outlet boss assembly 18 is in sealed connection with an effectively closed outlet housing 34, supported in the casing, and into which the outlet end of the tube 20 opens. The upstream end of the outlet housing is closed by a structure 35 defining an outer tube 36 surrounding the down stream end of the measuring tube 20. Tube 36 extends for about one quarter of the length of the tube 20 and has a closed end 37 sealed around the tube 20. The structure 35 includes supports 38 for supporting the downstream transducer 27. The outer tube inner diameter is substantially aligned with the edge of the active face 28 of the transducer 27 and the annular space between the outer tube and measuring tube 20 therefore opens opposite the peripheral portion of the transducer 27.

A valve seat 40 is formed in the outlet housing for locating a valve in the gas flow between the outlet end of the measuring tube and the outlet boss assembly.

In use, gas flows through the inlet boss into the casing, around the flow tube and from there through the tube 20 into the outlet housing, through the space between the outlet end 23 of the flow tube and the transducer 27, and out through the outlet boss. The annular space between the down stream end of the flow tube 20 and the outer tube 36 will be filled with the fluid but that fluid is not in the flow path and will remain substantially stationary.

Both transducers are connected to control circuits and a micro computer indicated diagrammatically at 41 . These operate to generate and receive the pulsed ultrasonic signals and to make the required calculations of flow. The required signals for measuring the speed of the ultrasonic signal in the stationary fluid will be made using the outer peripheral portion of the transducer 27 and the annular space in the outer tube 36. The circuits for generating and measuring the signals and for making the necessary calculations are known, and will not be redescribed. More detailed theory of the transit times used in ultrasonic flow meters can be found in the Journal of Sound and Vibration (1982) 84(1), pages 133-147.

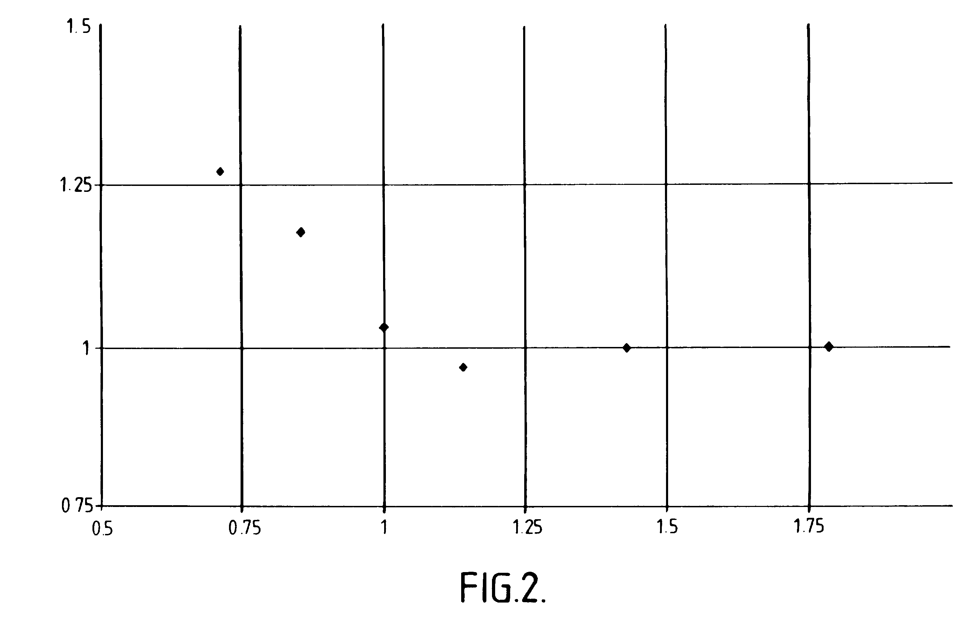

Figure 2 shows, along the vertical axis the ratio of sensitivity to parabolic velocity profile to flat velocity profile of the flow in a measurement tube, and along the horizontal axis the ratio of the transducer to the tube diameter. In this case the tube diameter was 14 millimetres the transducer separation from the ends of the tubes was 7 millimetres. As will be seen there is considerable variation for different velocity profiles when the transducer is smaller than the tube diameter but this variation appears to be lost when the transducer diameter exceeds the tube diameter, particularly when it exceeds diameter by more than 25%.

## Claims

1. Apparatus being an ultrasonic meter, including a pair of transducers for measuring the transit times of ultrasonic pulses within a fluid flowing through a measuring tube, wherein the effective diameters of the transducers is at least 20% greater than the average effective diameter of the measuring tube.

2. Fluid measuring apparatus comprising a measuring tube for location in a flow path of fluid in the apparatus, first and second transducers located at opposite ends of the measuring tube and arranged to respectively transmit and receive sequentially signals to and from each other, which signals pass through the tube in paths which are substantially symmetrical about the axis of the tube and in which the diameters of the active areas of the faces of the transducers are greater than the average diameter of the effective length of the tube, excluding any widened inlet or outlet portions thereof.

3. Apparatus according to claim 1 or claim 2 wherein the relevant diameters of the transducers are at least 25% greater, preferably 75% greater and more preferably approximately twice the average diameter of the measuring tube.

4. Apparatus according to any preceding claim, wherein the transducers are mounted coaxially with the measuring tube.

5. Apparatus according to any one of claims 1 to 3 wherein the transducers are arranged in cooperation with reflectors so that the paths of signals passing through the tube are effectively symmetrical about the axis thereof and symmetrical about the centres of the transducers.

6. Apparatus according to any preceding claim wherein the peripheral portion of at least one of the first and second transducers is used to provide a measurement of the speed of sound in stationary fluid.

7. Apparatus according to claim 6 wherein one end of the measuring tube is surrounded by an outer tube which is open, adjacent the periphery of one of the transducers, to the fluid in the system, but is not in the flow path of the fluid and therefore contains substantially stationary fluid of the type to be measured; and a signal from the peripheral portion of one transducer is sent in a direction parallel to the tube axis along the outer tube and returned to that peripheral portion of the transducer, thereby to enable calculation of the speed of sound in the stationary fluid.

8. Apparatus according to claim 7 wherein the length of the outer tube is less than one quarter the length of the measuring tube.

9. Apparatus according to claim 8 or claim 9 wherein the outer tube is provided with a small hole at the end thereof spaced from the relevant transducer but is nevertheless closed to substantial fluid flow, thereby to refresh the stationary fluid.

10. An ultrasonic flow meter wherein the measuring tube has a bell shaped mouth at the inlet end, a first outward taper along the majority of its length towards the outlet end, the first taper preferably being in the range 2° to 5° and has a second taper at the outlet end, the second taper preferably being in the range of 5° to 10°.

11. An ultrasonic meter according to claim 11 wherein the inlet end is curved through approximately 90° with a radius which is less than half the diameter of the tube, while the outlet end has a length less than one sixth and preferably less than one eighth of the length of the tube.
